# EUROPEAN PATENT SPECIFICATION

(11) **EP 2 966 732 B1**
(45) Date of publication and mention of the grant of the patent: **26.04.2017**
(21) Application number: 15002193.9
(22) Date of filing: 29.12.2011
(51) Int. Cl.: H01R 13/52, B60L 11/18

(54) **CHARGING CONNECTOR AND METHOD OF MOUNTING IT**
LADESTECKER UND VERFAHREN ZU DESSEN MONTAGE
CONNECTEUR DE CHARGE ET PROCÉDÉ DE MONTAGE

(30) Priority: 04.02.2011 JP 2011023129
(43) Date of publication of application: 13.01.2016
(62) Divisional of application: 11010288.6
(73) Proprietor: Sumitomo Wiring Systems, Ltd., Yokkaichi City Mie 510 (JP)
(72) Inventor: Ichio, Toshifumi, Yokkaichi-City, MIE 510-8503 (JP)
(74) Representative: Müller-Boré & Partner Patentanwälte PartG mbB

(56) References cited:
- EP-A1- 0 715 373
- WO-A1-2010/060370
- JP-A- 6 290 831
- US-B1- 6 183 274

## Description

The present invention relates to a charging connector which is connected to a vehicle-side connector provided in a vehicle to charge a battery installed in the vehicle, and to a method of mounting or connecting it.

A charging connector disclosed in document JPH06290831 A is, for example, known as a charging connector of this type. This includes a connector connecting portion connectable to a vehicle-side connector. Such a connector connecting portion is provided in a front end portion of a case body, and a cable connected to a power supply is drawn out from a lower part at the rear end of the case body. A plurality of terminal fittings such as a power supply terminal for supplying power from the power supply to the vehicle-side connector are provided in the connector connecting portion, and these terminal fittings are arranged to be located at the front side of the case body so as to be connectable to vehicle-side terminals provided in the vehicle-side connector. Further, the case body includes a protection cap to be mounted on the connector connecting portion.

However, the above protection cap is attached to a grip portion of the case body via a belt and a hook for catching the belt is provided on the grip portion. In such a case, since a part of the grip portion where the hook is provided cannot be held, the grip portion needs to include a part to be held in addition to the part where the hook is provided. This makes the grip portion larger, causing poor appearance and, in addition, enlarges the charging connector.

EP 0 715 373 A1 discloses a plug connector with a connector cap. The plug connector comprises a connector hood having an end opening, a plug element mounted within the hood and having a connection end for close fit to a fitting portion of a receptacle connector through the end opening, and the connector cap for closing the connection end when the connection end is disconnected from the receptacle so as to protect the connector from water and dust.

WO 2010/060370 A1 discloses a charging device for an electrically drivable vehicle.

The present invention was completed in view of the above situation and an object thereof is to enable mounting of a protection cap without enlarging a charging connector.

This object is solved according to the invention by the features of the independent claims. Particular embodiments of the invention are subject of the dependent claims.

According to one aspect of the invention, there is provided a charging connector defined in claim 1.

According to the above, since the protection cap removed from the connecting portion can be attached to the cable, it is not necessary to provide the case body with an attaching portion used to attach the protection cap and enlarge the charging connector. Further, since the protection cap can be attached to the cable, damage of a vehicle body such as due to the contact of the protection cap with the vehicle body can be prevented. The lock portion can be protected by the protecting portion and, in addition, the protection cap can be attached to the cable by hooking this protecting portion onto the cable.

The present invention is preferably embodied to have the following constructions.

The protection cap may include a facing wall substantially facing the connecting portion in a mounting direction to cover the connecting portion and a peripheral wall extending from the facing wall in the mounting direction substantially along the outer surface of the connecting portion.

The connecting portion may include a power supply terminal for supplying power and at least one separation wall extending from a facing surface of the facing wall substantially in the mounting direction to separate the power supply terminal from another terminal.

A distance between a leading end of the catching portion and a projecting end of a locking projection may be set to be smaller than the diameter of the cable.

A dimension of a first side of the peripheral wall along the mounting direction may be smaller than a dimension of a second side thereof in forward and backward directions,

According to another aspect of the invention, there is provided a method defined in claim 6.

According to the above, it is possible to enable mounting of a protection cap without enlarging a charging connector.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view showing a state where a protection cap is mounted on a connecting portion in a non-claimed example,
FIG. 2 is a side view showing a state where the protection cap is attached to a cable,
FIG. 3 is a side view showing the internal structures of the protection cap and the connecting portion in FIG. 1,
FIG. 4 is a bottom view showing the state where the protection cap is mounted on the connecting portion,
FIG. 5 is a bottom view showing the state where the protection cap is attached to the cable,
FIG. 6 is a front view showing the state where the protection cap is mounted on the connecting portion,
FIG. 7 is a section showing a state of mounting the protection cap on the connecting portion,
FIG. 8 is a side view showing a state of removing the protection cap from the connecting portion,
FIG. 9 is a plan view of the protection cap,
FIG. 10 is a bottom view of the protection cap,
FIG. 11 is a side view of the protection cap,
FIG. 12 is a front view of the protection cap,
FIG. 13 is a rear view of the protection cap,
FIG. 14 is a section along A-A of FIG. 13,
FIG. 15 is a rear view showing a state where a protection cap is mounted on a connecting portion in a first embodiment,
FIG. 16 is a perspective view showing the state where the protection cap is mounted on the connecting portion when obliquely viewed from front,
FIG. 17 is a plan view of the protection cap,
FIG. 18 is a side view of the protection cap,
FIG. 19 is a section corresponding to FIG. 3 in the first embodiment,
FIG. 20 is a rear view of the protection cap,
FIG. 21 is a front view of the protection cap,
FIG. 22 is a rear view showing a state where a protection cap is attached to a cable in a second embodiment,
FIG. 23 is a perspective view showing a state where the protection cap is attached to the cable when obliquely viewed from front,
FIG. 24 is a plan view of the protection cap,
FIG. 25 is a side view of the protection cap,
FIG. 26 is a section corresponding to FIG. 3 in the second embodiment,
FIG. 27 is a rear view of the protection cap,
FIG. 28 is a front view of the protection cap.

### <Non-claimed example>

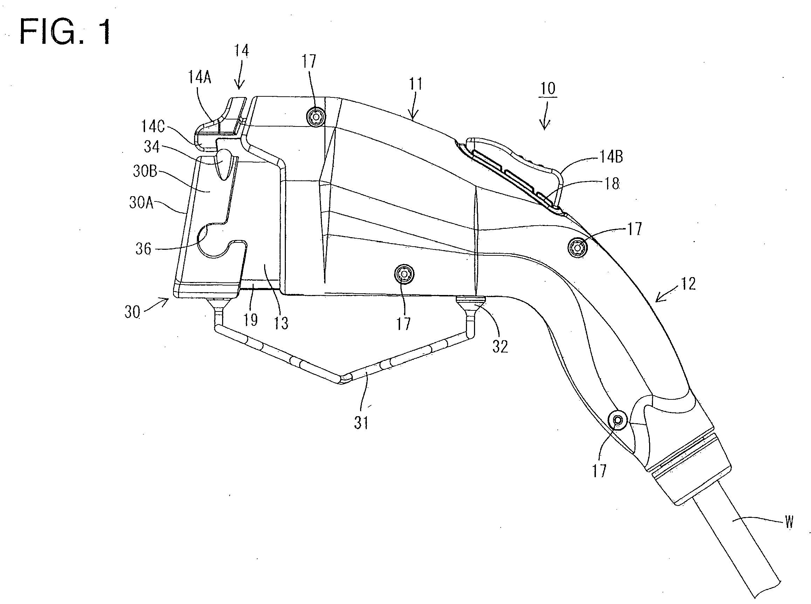

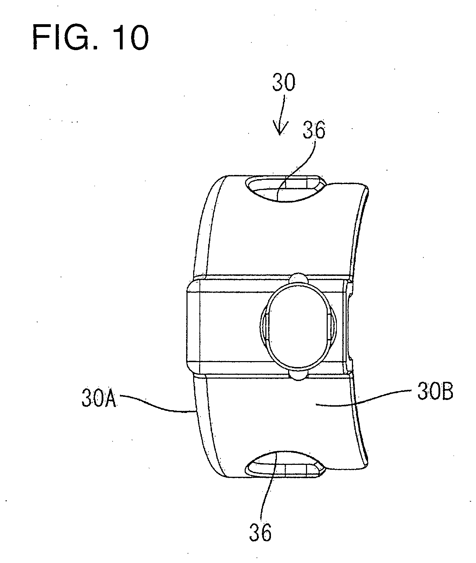

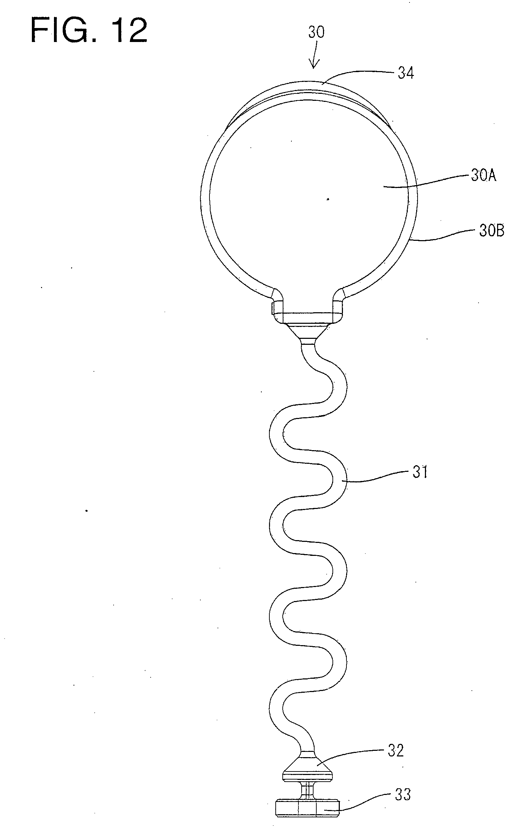

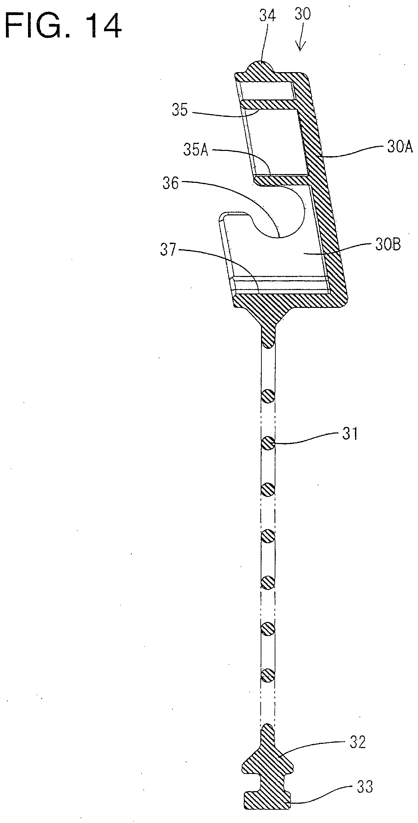

A non-claimed example is described with reference to FIGS. 1 to 14. As shown in FIG. 1, a charging connector 10 in this non-claimed example substantially is pistol-shaped (gun-shaped) as a whole and includes a connector main body 11 constituting or forming part of a substantially front portion (particularly half part) and a grip 12 extending obliquely downward from a rear end portion of this connector main body 11. The connector main body 11 and the grip 12 are integrally or unitarily molded, both made e.g. of synthetic resin, and particularly assembled by uniting a pair of half case bodies and fixing them using a plurality of bolt fastening portions 17. Note that a "case body" particularly corresponds to the connector main body 11 and the grip 12.

A (particularly substantially cylindrical or tubular) connecting portion 13 substantially projecting forward is mounted at or near a front end portion of the connector main body 11. A lever 14 is housed in or on (particularly an upper side of the interior of) the connector main body 11, and a lock portion 14A provided at or near a front end portion of the lever 14 substantially projects forward from the connector main body 11 to be located outside. This lock portion 14A includes a claw portion 14C projecting at an angle different from 0° or 180°, preferably substantially orthogonal with respect to the lock portion 14A or downward. On the other hand, an unlocking portion 14B for unlocking the lever 14 is provided at or near a rear end portion of the lever 14. This unlocking portion 14B projects to the outside of the connector main body 11 through an insertion hole 18 formed in (particularly the rear end of the upper surface of) the connector main body 11.

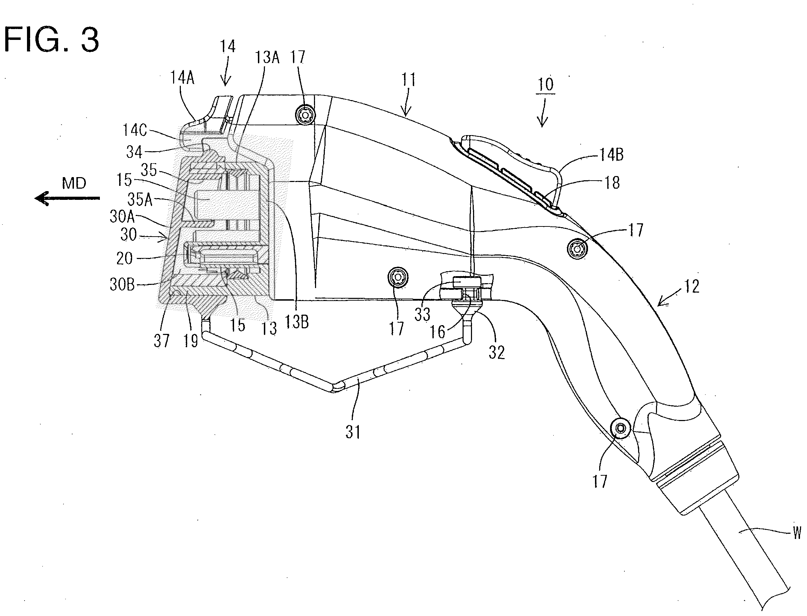

The connecting portion 13 particularly is formed as a member separate from the connector main body 11 and fixed to the connector main body 11 by an unillustrated locking means. This connecting portion 13 includes a receptacle 13A which is open forward, and one or more. Particularly a plurality of (particularly substantially cylindrical) terminal accommodating portions 15 project forward from a back wall 13B of this receptacle 13A as shown in FIG. 3. These terminal accommodating portions 15 particularly are covered over the substantially entire circumferences by the receptacle 13A. One or more cavities for at least partly accommodating terminal fittings 20 are formed in the terminal accommodating portion(s) 15.

One or more, particularly a plurality of terminal fittings 20 are provided in one or more stages and particularly are composed of a terminal fitting 20 in an upper or first row and that in a lower or second row, wherein the terminal fitting 20 in the upper or first row particularly is a power supply terminal for supplying power and/or that in the lower or second row particularly is a signal terminal for transmitting and receiving electrical signals. A cable W is drawn out from an end portion of the grip 12, wherein one end of the cable W is connected to a power supply and, on the other hand, the other end thereof is connected to the terminal fitting 20 particularly in the upper or first row. In this way, the charging connector 10 of this non-claimed example is or can be connected to a vehicle-side connector (not shown) provided in a vehicle, and the terminal fitting 20 in the upper or first row is to be connected to a vehicle-side terminal fitting (not shown) provided in the vehicle-side connector to provide current to circuits provided therein e.g. to charge a battery (not shown) installed in the vehicle.

A protection cap 30 made of an insulating material is mounted on or to the connecting portion 13, and the terminal fittings 20 are protected in a state electrically insulated from the outside by this protection cap 30. The material of the protection cap 30 is preferably flexible elastomer having a rubber hardness of more than about 30, particularly of about 40. A rubber or resilient or flexible string 31 is integrally or unitarily molded to the protection cap 30, and the protection cap 30 is connected or connectable to the connector main body 11 by this rubber string 31. This enables the protection cap 30 and the connector main body 11 to be handled as an integral assembly and prevents the protection cap 30 from being separated from the connector main body 11.

An end portion of the rubber string 31 includes a holding portion 32 for holding the end portion of the rubber string 31 onto the connector main body 11 particularly by being fitted into a water drain hole 16 formed to penetrate through (particularly a rear part of the lower surface of) the connector main body 11. A part of the holding portion 32 at least partly accommodated in the connector main body 11 serves as a retaining piece 33 particularly substantially in the form of a flat plate having a diameter larger than the hole diameter of the water drain hole 16 as shown in FIG. 3. Note that although the holding portion 32 is held and retained by assembling the connector main body 11 with the retaining piece 33 fitted in the water drain hole 16 in advance in this non-claimed example, the retaining piece may be formed to have a tapered shape so as to be insertable into the water drain hole 16 after the connector main body 11 is assembled.

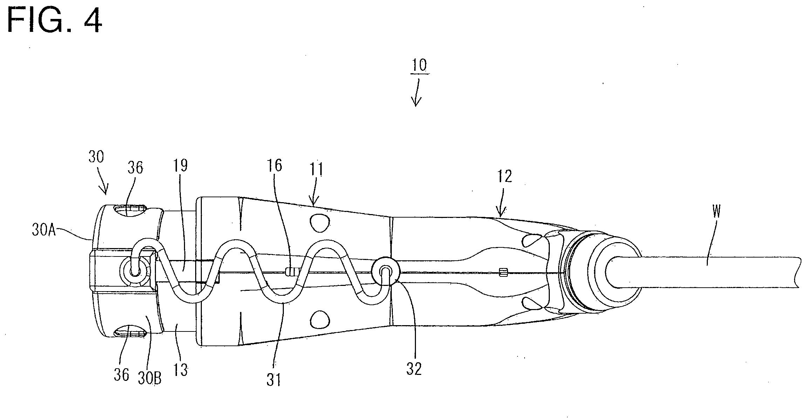

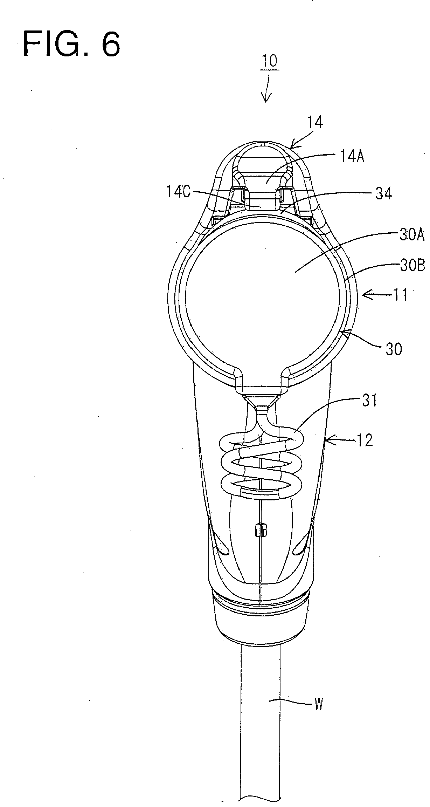

As shown in FIG. 4 or 6, the rubber string 31 substantially is wavy or spiral-shaped with the protection cap 30 mounted on the connecting portion 13. As a result, as shown in FIG. 1, the hanging down of the rubber string 31 from the connector main body 11 is maximally suppressed and the rubber string 31 is arranged near the connector main body 11. This is to prevent the charging connector 10 from being lifted by mistakenly holding the rubber string 31 in starting a charging operation.

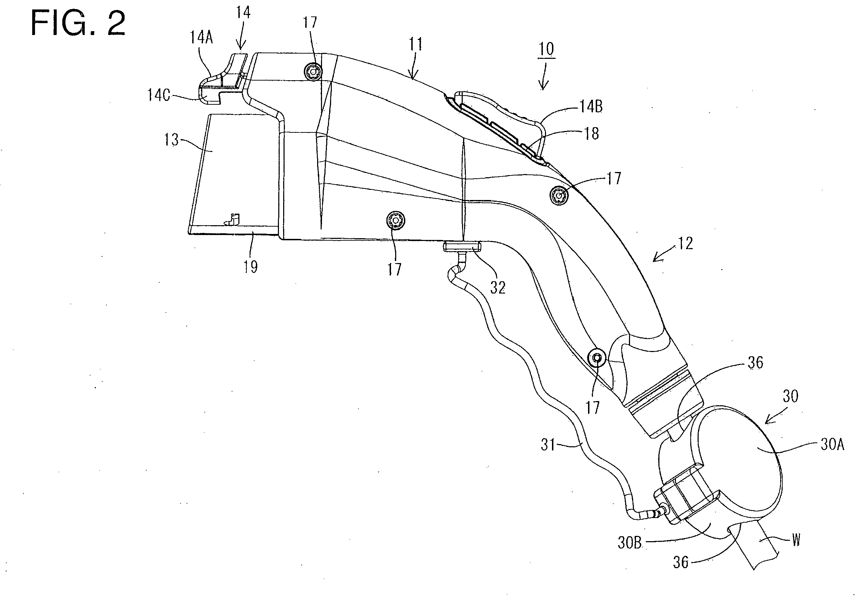

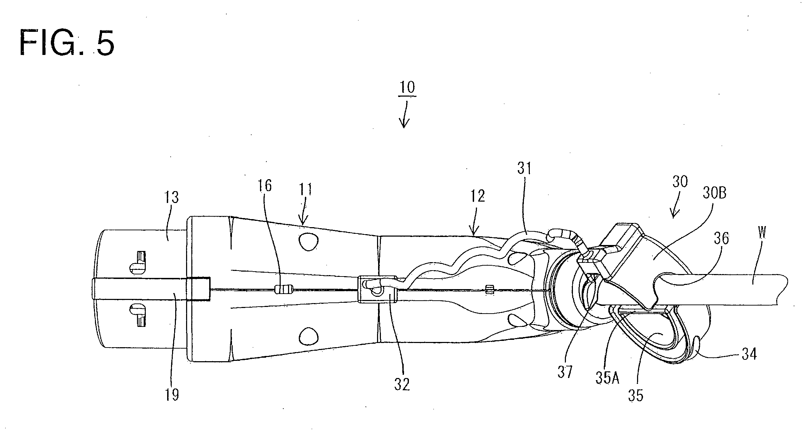

In starting the charging operation, the protection cap 30 is removed to expose the connecting portion 13 to the outside. If the protection cap 30 is left to hang down from the connector main body 11 at this time, the protection cap 30 may damage a vehicle body, such as by coming into contact with the vehicle body. Thus, in this non-claimed example, the protection cap 30 removed from the connecting portion 13 is to be attached to the cable W of the charging connector 10 as shown in FIG. 2 or 5. By doing so, the contact of the protection cap 30 with the vehicle body can be prevented. Note that the rubber string 31 is at least partly stretched near the grip 12 in a state where the protection cap 30 is attached to the cable W.

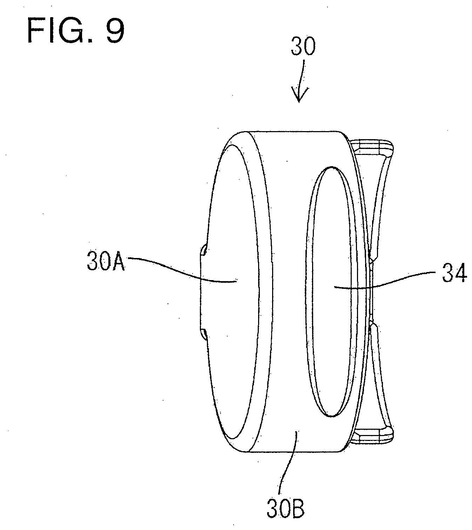

As shown in FIGS. 9 to 14, the protection cap 30 includes a (particularly substantially tubular or circular) facing wall 30A and a peripheral wall 30B extending from (particularly the peripheral edge of) this facing wall 30A. The facing wall 30A is arranged while being somewhat inclined with respect to a mounting direction MD of the connecting portion 13 and the protection cap 30 as shown in FIG. 3. Accordingly, the upper side of the peripheral wall 30B is shorter than the lower side thereof in forward and backward directions (or along the mounting direction MD). Further, at least one locking projection 34 for holding the protection cap 30 onto the connecting portion 13 by being engaged with the claw portion 14C of the lock portion 14A from behind projects outward or upward from the outer or upper surface of the peripheral wall 30B. This locking projection 34 particularly substantially has an elliptical shape long in a circumferential direction of the peripheral wall 30B as shown in FIG. 9.

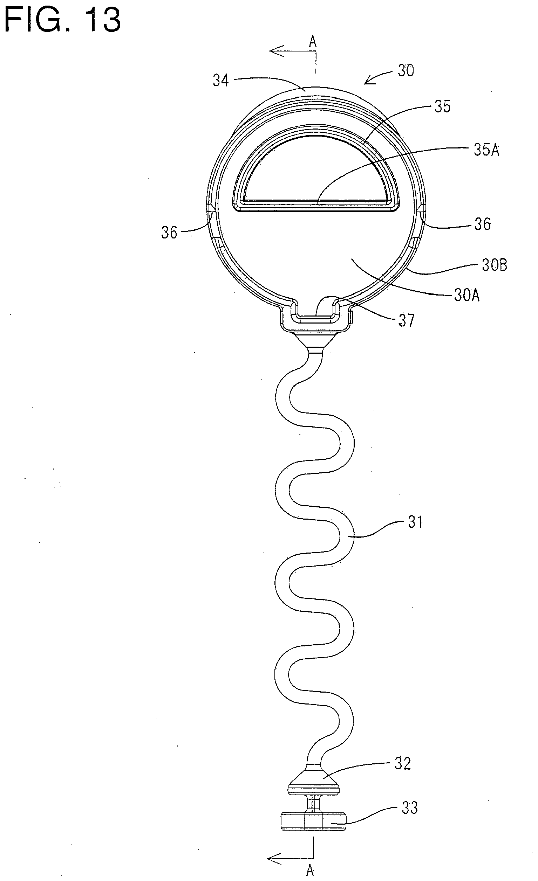

As shown in FIG. 3, the facing wall 30A is arranged to substantially close a front end opening of the receptacle 13A by facing toward the connecting portion 13 in forward and backward directions (mounting direction MD), and the leading end of the receptacle 13A particularly substantially is in contact with a facing surface of the facing wall 30A facing the connecting portion 13. On the other hand, the peripheral wall 30B substantially extends backward along the outer circumferential surface of the receptacle 13A of the connecting portion 13. A (particularly substantially semicircular) separation wall 35 substantially extends backward from the facing surface of the facing wall 30A as shown in FIG. 13. As shown in FIG. 3, the separation wall 35 is arranged to at least partly cover the terminal fitting 20 particularly in the upper or first row over the entire circumference. A substantially straight part 35A of this separation wall 35 is at least partly inserted between the terminal fitting 20 in the upper or first row and that in the lower or second row, whereby the upper or first and lower or second terminal fittings 20 are held electrically insulated. Note that the height of the straight part 35A is so set that the upper or first and lower or second terminal fittings 20 can be held electrically insulated and the straight part 35A can be engaged with the cable W.

Note that a positioning groove 37 is formed to extend in forward and backward directions (or along the mounting direction MD) in the protection cap 30 as shown in FIG. 13. This positioning groove 37 is recessed outward or downward from (particularly a bottom end portion of) the peripheral wall 30B and can at least partly receive a positioning rib 19 projecting from (particularly a bottom end portion of) the receptacle 13A of the connecting portion 13. The protection cap 30 is or can be circumferentially positioned with respect to the connecting portion 13 by engaging the positioning rib 19 with the positioning groove 37.

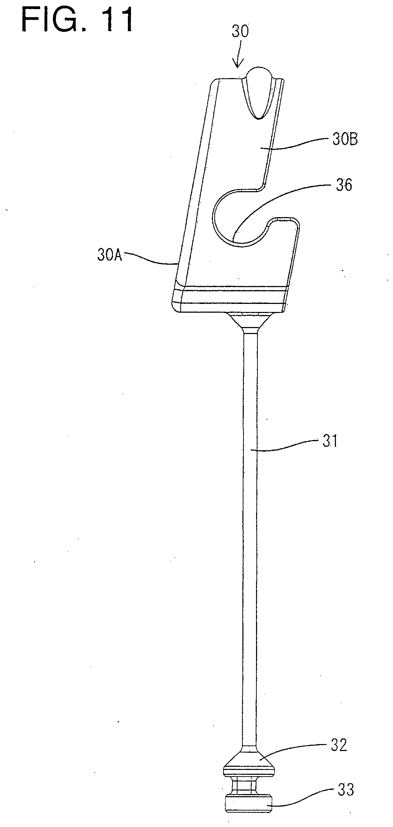

As shown in FIG. 11, a pair of mounting grooves 36 are formed in the opposite side surfaces of the peripheral wall 30B. These mounting grooves 36 are formed by cutting the peripheral wall 30B substantially in an arcuate manner from an end edge of the peripheral wall 30B toward the facing wall 30A, and parts of the peripheral wall 30B below the mounting grooves 36 project more backward than parts of the peripheral wall 30B above the mounting grooves 36. Each mounting groove 36 surrounds or can surround the cable W over more than about half the circumference (e.g. about 3/4 of the circumference in this non-claimed example). Thus, when the cable W is mounted in the mounting grooves 36, the cable W is surrounded over more than about half the circumference by the mounting grooves 36 and the protection cap 30 is or can be attached while being hooked onto the cable W as shown in FIG. 5. Further, the straight part 35A of the separation wall 35 is arranged substantially along the cable W extending between the both mounting grooves 36, and the protection cap 30 can be hooked onto the cable W by tight holding of the cable W by the both mounting grooves 36 and the contact of the cable W with the straight part 35A of the separation wall 35. Therefore, the protection cap 30 can be more strongly attached to the cable W.

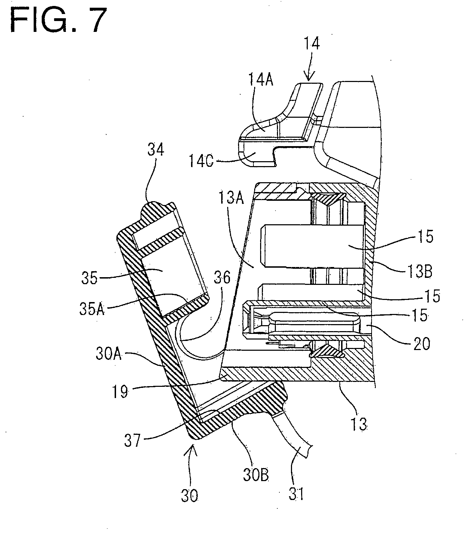

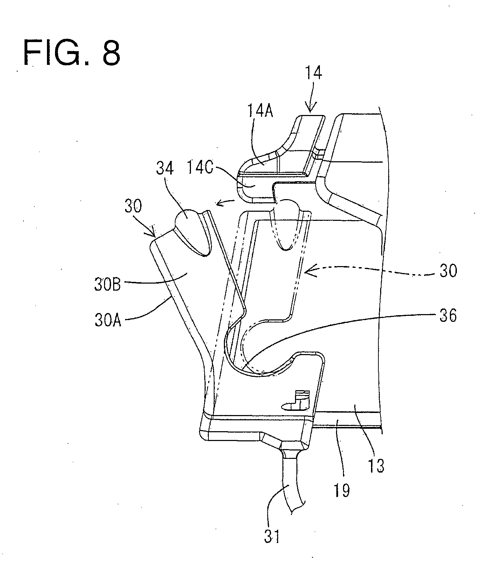

In mounting the protection cap 30 on the connecting portion 13, a mounting operation is performed by placing the lower side of the peripheral wall 30B of the protection cap 30 on the lower side of the receptacle 13A of the connecting portion 13 as shown in FIG. 7. Further, since a dimension of the upper side of the peripheral wall 30B in forward and backward directions (or along the mounting direction MD) is smaller than a dimension of the lower side thereof in forward and backward directions, the upper side of the peripheral wall 30B is less likely to interfere with the claw portion 14C, whereby it can be suppressed to make mounting of the protection cap 30 on the connecting portion 13 difficult, when the lower side of the connecting portion 13 is held in contact with the lower side of the peripheral wall 30B with the protection cap 30 inclined and the protection cap 30 is mounted on the connecting portion 13 by being rotated upward about this contact part. On the other hand, in removing the protection cap 30 from the connecting portion 13, the upper side of the protection cap 30 above the mounting grooves 36 is or can be pulled apart from the connecting portion 13 to perform a removing operation as shown in FIG. 8. By this removing operation, parts of the protection cap 30 between the peripheral edges of the mounting grooves 36 and the facing wall 30A are resiliently deformed to widen opening parts of the mounting grooves 36.

As described above, in this non-claimed example, the protection cap 30 can be attached to the cable W by at least partly fitting the mounting grooves 36 of the protection cap 30 to the cable W. Accordingly, it is not necessary to provide the connector main body 11 or the grip 12 with an attaching porting used to attach the protection cap 30 and enlarge the charging connector 10. Further, by attaching this protection cap 30 to the cable W after the protection cap 30 is removed from the connecting portion 13, the vehicle body can be prevented from being damaged, such as by the contact of the protection cap 30 therewith.

Further, since the protection cap 30 particularly can be hooked onto the cable W by the contact of the cable W substantially along the straight part 35A of the separation wall 35 at least partly inserted between the terminal fitting 20 in the upper or first row and that in the lower or second row, attachment strength to the cable W can be increased as compared with the case where the cable W is received only by being tightly held at the both mounting grooves 36. Furthermore, since the upper parts of the mounting grooves 36 in the protection cap 30 are reinforced by the separation wall 35, only the facing wall 30A adjacent to the mounting grooves 36 can be bent while the mounting grooves 36 are deformed to be widened without resiliently deforming the upper parts.

Since the straight part 35A of the separation wall 35 that separates the terminal fitting 20 in the upper or first row as the power supply terminal and the terminal fitting 20 in the lower or second row as the signal terminal substantially is arranged along the cable W, the protection cap 30 can also be supported by bringing this straight part 35A into contact with the cable W.

Accordingly, to enable mounting of a protection cap without enlarging a charging connector. a charging connector 10 is provided which is to be connected to a vehicle-side connector provided in a vehicle to provide current or power to circuit(s) mounted thereon, e.g. to charge a battery installed in the vehicle. The charging connector 10 includes a connector main body 11 with a connecting portion 13 connectable to the vehicle-side connector, a protection cap 30 made of an insulating material and to be mounted on the connecting portion 13 separated from the vehicle-side connector, and a cable W drawn out from the interior of the connector main body 11 to be connected to a power supply. The protection cap 30 is to be removed from the connecting portion 13 and attached to the cable W in connecting the connecting portion 13 to the vehicle-side connector.

### <First Embodiment>

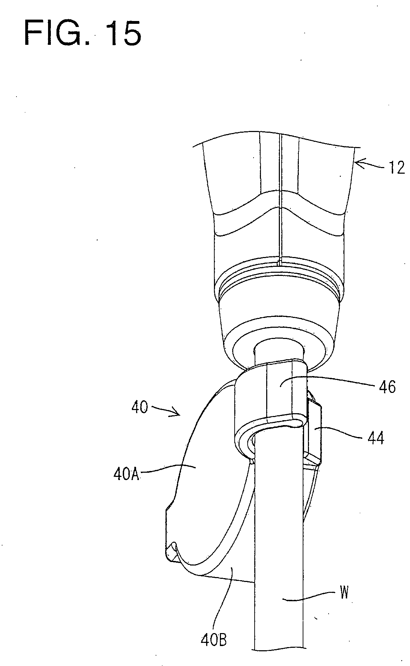

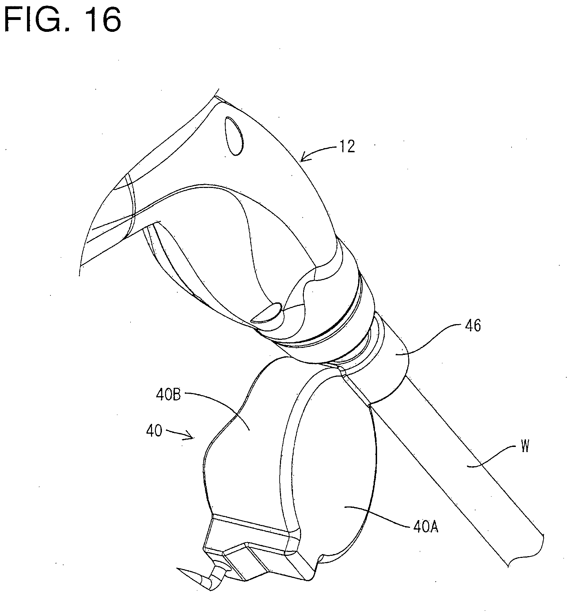

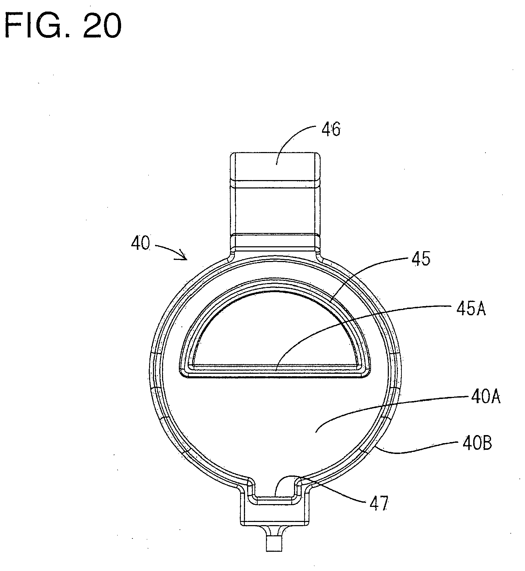

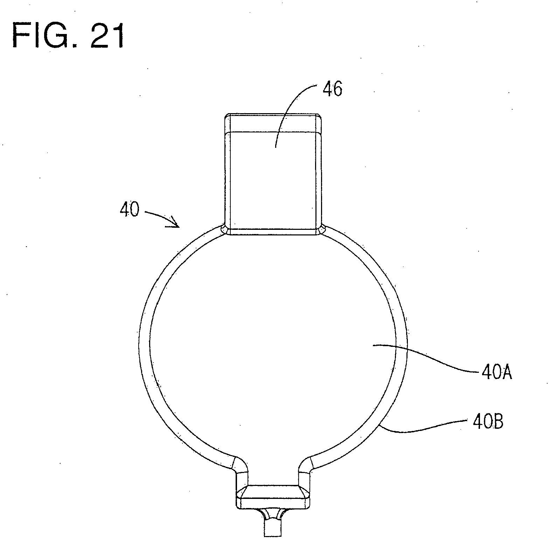

Next, a First particular embodiment of the present invention is described with reference to FIGS. 15 to 21. This embodiment is achieved by partly changing the construction of the protection cap 30 in the non-claimed example and the other constructions are same or similar. Accordingly, the same or similar constructions as in the non-claimed example are identified by the same reference numerals and the same or similar constructions, functions and effects as in the non-claimed example are not described to avoid repetitive description. Further, the same or similar constructions as the protection cap 30 of the non-claimed example are identified by reference numerals, the tens digit of which is changed from 3 to 4.

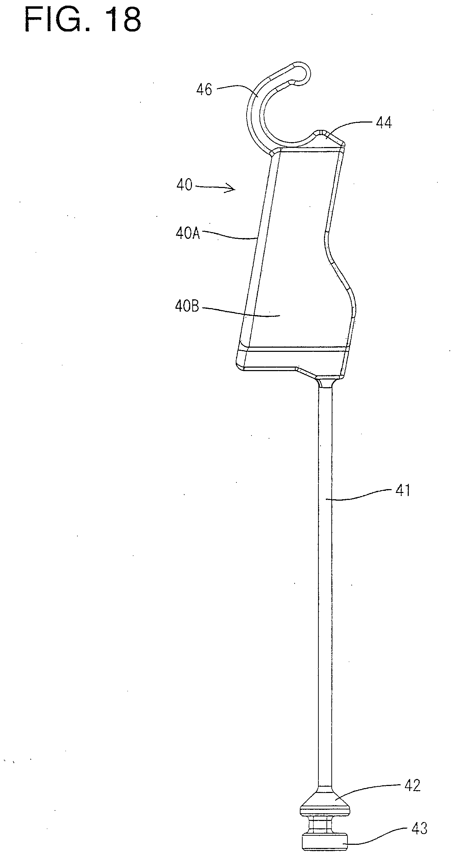

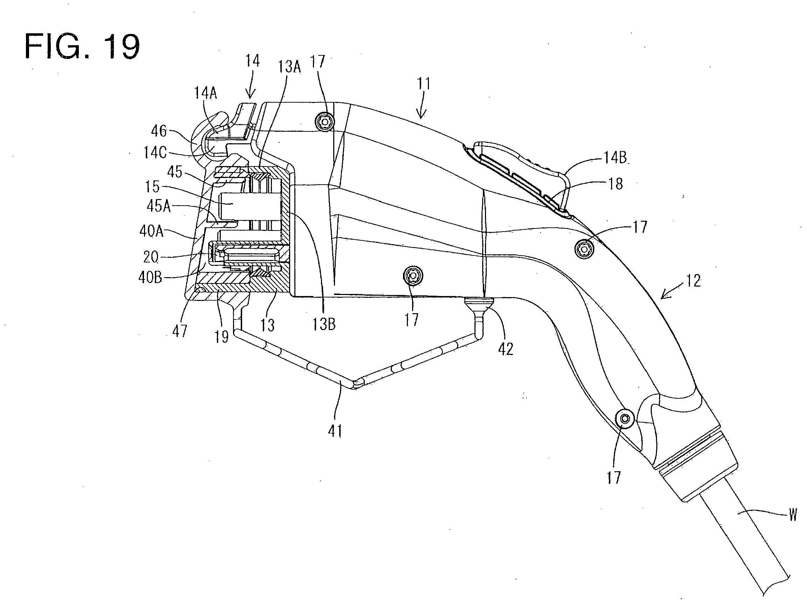

In a protection cap 40 of this embodiment, the mounting grooves 36 are not provided in a peripheral wall 40B and, instead, a hook-shaped catching portion 46 stands up or projects from (particularly the upper edge of) a facing wall 40A as shown in FIG. 18. This catching portion 46 has an arcuate or bent shape and is folded backward from (particularly the upper edge of) the facing wall 40A. Thus, when the protection cap 40 is mounted on the connecting portion 13, the catching portion 46 is arranged to at least partly cover the claw portion 14C of the lock portion 14A as shown in FIG. 19. In this way, the lock portion 14A is protected from the outside by the catching portion 46.

In attaching the protection cap 40 to the cable W, the protection cap 40 is so fixed to the cable W as to wind the catching portion 46 around the cable W as shown in FIG. 15. That is, the catching portion 46 is formed to surround the cable W over more than about half the circumference and/or the leading end of the catching portion 46 projects radially inwardly and is formed to be somewhat thicker. Further, a distance between the leading end of the catching portion 46 and the projecting end of a locking projection 44 particularly is set to be smaller than the diameter of the cable W. Thus, the catching portion 46 is held hooked or snapped onto the cable W and the protection cap 40 is attached to the cable W.

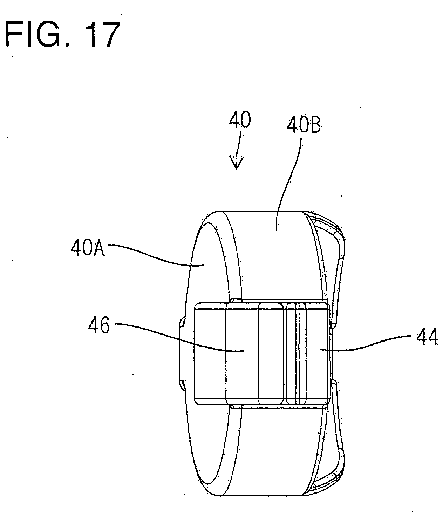

Note that, as shown in FIG. 17, the locking projection 44 particularly is formed to have the same width as the catching portion 46, particularly is smaller than the locking projection 34 of the non-claimed example in a width direction and/or parallel to the leading end of the catching portion 46.

As described above, in this embodiment, the catching portion 46 can be used both as an attaching portion to the cable W and as a protecting portion for the lock portion 14A since the catching portion 46 protects the lock portion 14A by mounting the protection cap 40 on the connecting portion 13.

### <Second Embodiment>

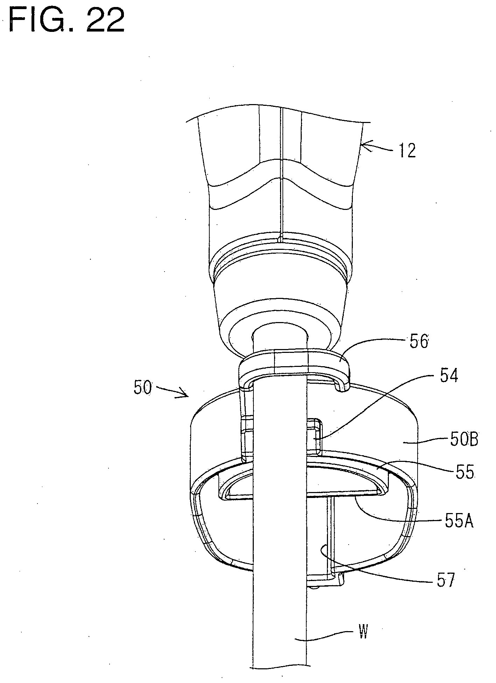

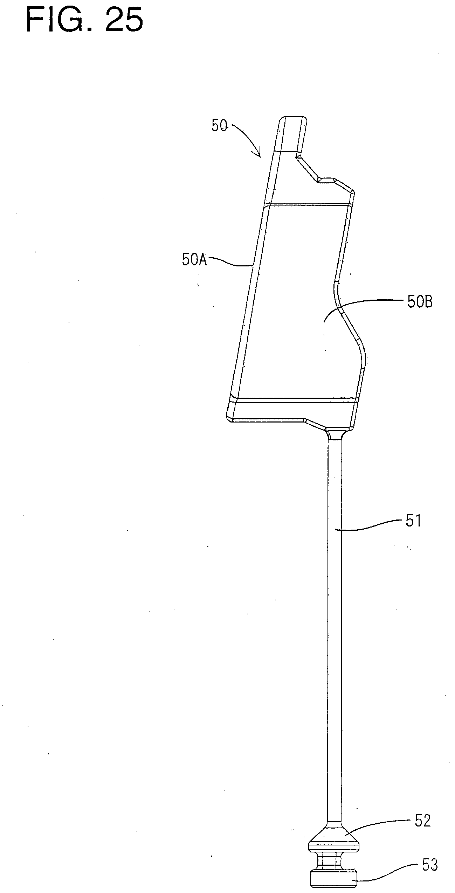

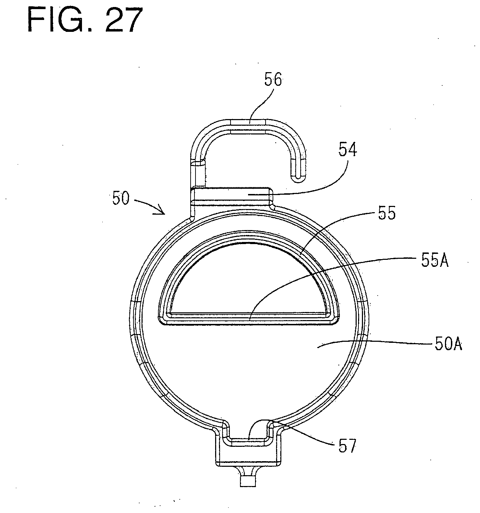

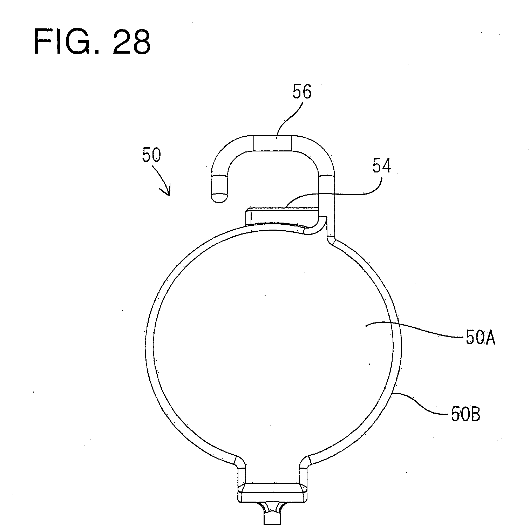

Next, a second particular embodiment of the present invention is described with reference to FIGS. 22 to 28. A protection cap 50 of this embodiment is obtained by partly changing the construction of the protection cap 30 in the non-claimed example similar to the protection cap 40 of the first embodiment and the other constructions are same or similar. Accordingly, the same or similar constructions as in the non-claimed example are identified by the same reference numerals and the same or similar constructions, functions and effects as in the non-claimed example are not described to avoid repetitive description. Further, the same or similar constructions as the protection cap 30 of the non-claimed example are identified by reference numerals, the tens digit of which is changed from 3 to 5.

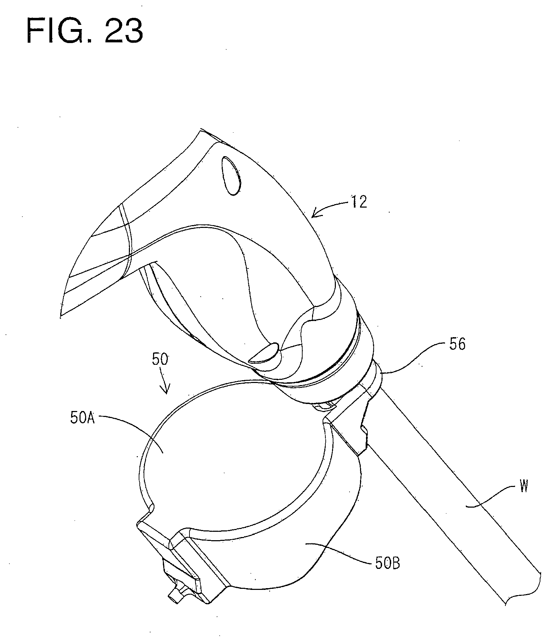

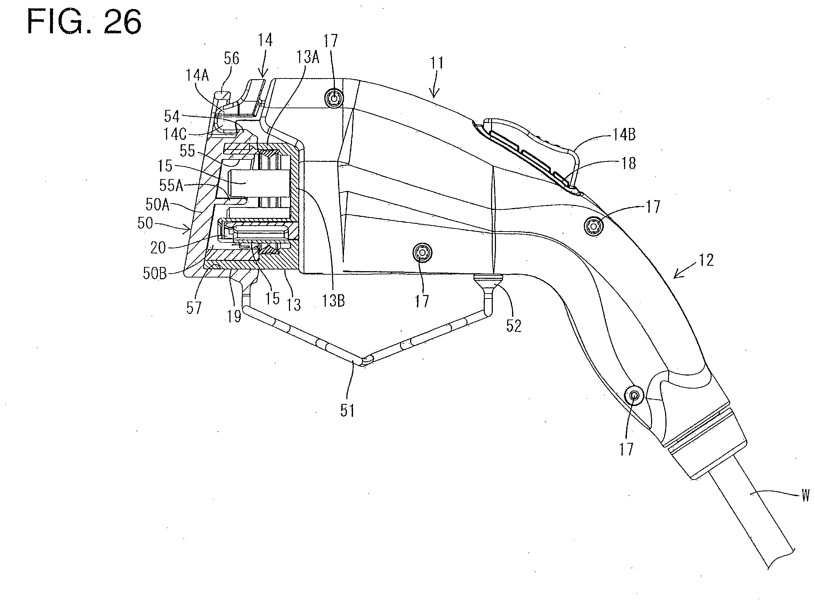

In the protection cap 50 of this embodiment, the mounting grooves 36 are not provided in a peripheral wall 50B and, instead, a hook-shaped catching portion 56 stands up or projects from (particularly the upper edge of) a facing wall 50A as shown in FIGS. 22 and 23. This catching portion 56 substantially extends in a circumferential direction of a peripheral wall 50B after standing up or projecting from (particularly the upper end of) the peripheral wall 50B. Further, when the protection cap 50 is mounted on the connecting portion 13, the catching portion 56 is arranged to at least partly cover the claw portion 14C of the lock portion 14A as shown in FIG. 26. In this way, the lock portion 14A is protected from the outside by the catching portion 56.

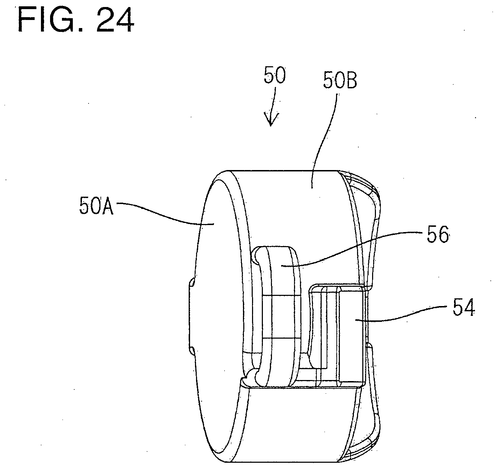

A distance between the leading end of the catching portion 56 and the peripheral wall 50B particularly is set to be smaller than the diameter of the cable W. Thus, the catching portion 56 is or can be held hooked or snapped onto the cable W and the protection cap 50 is or can be attached to the cable W. Note that the catching portion 56 is set to be about half or less of the diameter (dimension in forward and backward directions) of the peripheral wall 50B and arranged before the locking projection 54 so as not to vertically overlap the locking projection 54 as shown in FIG. 24.

As described above, in this embodiment, the catching portion 56 can be used both as the attaching portion to the cable W and as the protecting portion for the lock portion 14A as in the first embodiment and, in addition, the catching portion 56 can be formed to be smaller than the catching portion 46 of the first embodiment. Thus, the protection cap 50 can be made smaller than the protection cap 40 of the first embodiment.

### <Other non-claimed examples>

(1) Although the protection cap made of flexible elastomer is illustrated in the above embodiments, a protection cap made of synthetic resin may be used, i.e. it does not matter which material is used according to the present invention.
(2) Although the semicircular separation wall 35 is illustrated in the non-claimed example, and first and second embodiments, a separation wall composed only of a straight part may be provided according to the present invention. Further, the separation wall may be so formed that the straight part and the arcuate or bent part are or may be at different heights.

### LIST OF REFERENCE NUMERALS

- 10: charging connector
- 11: connector main body (case body)
- 12: grip (case body)
- 13: connecting portion
- 14A: lock portion

- 20: terminal fitting (power supply terminal, another terminal)
- 30, 40, 50: protection cap
- 30A, 40A, 50A: facing wall
- 30B, 40B, 50B: peripheral wall
- 35, 45, 55: separation wall
- 36: mounting groove
- 46, 56: catching portion (protecting portion)
- W: cable

## Claims

1. A charging connector (10) suitable for being connected to a vehicle-side connector provided in a vehicle to provide current for charging a battery installed in the vehicle, comprising:
a case body (11; 12) with a connecting portion (13) connectable to the vehicle-side connector;
a protection cap (40; 50) made of an insulating material and mountable on the connecting portion (13) disconnected from the vehicle-side connector;
a cable (W) drawn out from the interior of the case body (11; 12) to be connected to a power supply, and
a lock portion (14A) for locking the vehicle-side connector and the connecting portion (13) in a connected state,
wherein
a lever (14) is housed in or on the case body (11; 12),
the lock portion (14A) is provided at an end portion of the lever (14) and con-figured to project from the case body (11; 12),
the protection cap (40; 50) is removable from the connecting portion (13) and attachable to the cable (W) when connecting the connecting portion (13) to the vehicle-side connector,
a rubber or resilient or flexible string (41; 51) is integrally or unitarily molded to the protection cap (40; 50), and
the protection cap (40; 50) is connected or connectable to the case body (11; 12) by the string (41; 51), **characterized in that** the lock portion (14A) includes a claw portion (14C), and the protection cap (40; 50) integrally or unitarily includes a catching portion (46; 56) for protecting the lock portion (14A), and
the catching portion (46; 56) is in the form of a hook to be hooked onto the cable (W).

2. A charging connector (10) according to claim 1, wherein the protection cap (40; 50) includes a facing wall (40A; 50A) facing the connecting portion (13) in a mounting direction (MD) to cover the connecting portion (13) and a peripheral wall (40B; 50B) extending from the facing wall (40A; 50A) in the mounting direction (MD) along the outer surface of the connecting portion (13).

3. A charging (10) according to claim 2, wherein:
the connecting portion (13) includes a power supply terminal (20) for supplying power and at least one separation wall (45; 55) extending from a facing surface of the facing wall (40A; 50A) in the mounting direction (MD) to separate the power supply terminal (20) from another terminal.

4. A charging connector (10) according to claims 2 or 3, wherein the protection cap (40) further comprises at least one locking projection (44) for holding the protection cap (40) onto the connecting portion (13) by being engaged with the claw portion (14C) of the lock portion (14A) from behind by projecting outward from the outer surface of the peripheral wall (40B) and wherein a distance between a leading end of the catching portion (46) and a projecting end of the locking projection (44) is set to be smaller than the diameter of the cable (W).

5. A charging connector (10) according to any one of the preceding claims 2 to 4, wherein a dimension of a first side of the peripheral wall (40B) along the mounting direction (MD) is smaller than a dimension of a second side thereof in the mounting direction (MD).

6. A method of mounting a charging connector (10) to a vehicle-side connector provided in a vehicle to provide current for charging a battery installed in the vehicle, comprising the following steps:
mounting a protection cap (40; 50) made of an insulating material on a connecting portion (13) of a case body (11; 12) when separated from the vehicle-side connector, wherein a rubber or resilient or flexible string (41; 51) is integrally or unitarily molded to the protection cap (40; 50), and the protection cap (40; 50) is connected or connectable to the case body (11; 12) by the string (41; 51); and
before or when connecting the connecting portion (13) to the vehicle-side connector, removing the protection cap (40; 50) from the connecting portion (13) and attaching the protection cap (40; 50) to a cable (W) drawn out from the interior of the case body (11; 12) to be connected to a power supply;
locking the vehicle-side connector and the connecting portion (13) in a connected state by means of a lock portion (14A), wherein a lever (14) is housed in or on the case body (11; 12), the lock portion (14A) is provided at an end portion of the lever (14) and con-figured to project from the case body (11; 12), and the lock portion (14A) includes a claw portion (14C);
protecting the lock portion (14A) by a catching portion (46; 56) integrally or unitarily formed on the protection cap (40; 50), wherein the catching portion (46; 56) is in the form of a hook to be hooked onto the cable (W).

## Patentansprüche

1. Ein Ladeverbinder (10), der dazu geeignet ist, fahrzeugseitig mit einem Anschluss verbunden zu werden, der in einem Fahrzeug bereitgestellt wird, um Strom bereitzustellen zum Aufladen einer Batterie, die im Fahrzeug installiert ist, der Folgendes umfasst:
einen Gehäusekörper (11; 12) mit einem Verbindungsabschnitt (13), der mit dem fahrzeugseitigen Anschluss verbindbar ist;
eine Schutzkappe (40; 50), die aus einem isolierenden Material hergestellt wird und auf dem vom fahrzeugseitigen Anschluss getrennten Verbindungsabschnitt (13) montiert werden kann;
ein Kabel (W), das aus dem inneren des Gehäusekörpers (11; 12) herausgeführt wird, um mit einer Stromversorgung verbunden zu werden, und
ein Verriegelungsabschnitt (14A), um den fahrzeugseitigen Anschluss und den Verbindungsabschnitt (13) im verbundenen Zustand zu verriegeln,
wobei
ein Hebel (14) im oder auf dem Gehäusekörper (11; 12) untergebracht wird,
der Verriegelungsabschnitt (14A) an einem Endabschnitt des Hebels (14) bereitgestellt wird und konfiguriert ist, um vom Gehäusekörper (11; 12) vorzustehen,
die Schutzkappe (40; 50) vom Verbindungsabschnitt (13) abnehmbar ist und am Kabel (W) anbringbar ist, wenn der Verbindungsabschnitt (13) mit dem fahrzeugseitigen Anschluss verbunden wird,
ein Gummi- oder nachgiebiges oder flexibles Band (41; 51) integral oder einstückig an der Schutzkappe (40; 50) angeformt wird, und
die Schutzkappe (40; 50) mit dem Gehäusekörper (11; 12) durch das Band (41; 51) verbunden oder verbindbar ist,
**dadurch gekennzeichnet, dass**
der Verriegelungsabschnitt (14A) einen Klauenabschnitt (14C) beinhaltet, und die Schutzkappe (40; 50) integral oder einstückig einen Fang- bzw. Arretierabschnitt (46; 56) zum Schutz des Verriegelungsabschnitts (14A) beinhaltet, und
der Arretierabschnitt (46; 56) die Form eines Hakens aufweist, um am Kabel (W) festgehakt zu werden.

2. Ein Ladeverbinder (10) nach Anspruch 1, wobei die Schutzkappe (40; 50) eine gegenüberliegende Wand (40A; 50A) aufweist, die dem Verbindungsabschnitt (13) in einer Montagerichtung (MD) zugewandt ist, um den Verbindungsabschnitt (13) abzudecken, und eine periphere Wand (40B; 50B), die ausgehend von der gegenüberliegenden Wand (40A; 50A) in Montagerichtung (MD) entlang der Außenfläche des Verbindungsabschnitts (13) verläuft.

3. Ein Lade (10) nach Anspruch 2, wobei:
der Verbindungsabschnitt (13) einen Stromversorgungsanschluss (20) zur Bereitstellung von Energie beinhaltet und mindestens eine Trennwand (45; 55), die ausgehend von einer Stirnfläche der gegenüberliegenden Wand (40A; 50A) in Montagerichtung (MD) verläuft, um den Stromversorgungsanschluss (20) von einem anderen Anschluss zu trennen.

4. Ein Ladeverbinder (10) nach den Ansprüchen 2 oder 3,
wobei die Schutzkappe (40) des Weiteren mindestens einen Verriegelungsvorsprung (44) umfasst, um die Schutzkappe (40) auf dem Verbindungsabschnitt (13) zu halten, indem er mit dem Klauenabschnitt (14C) des Verriegelungsabschnitts (14A) von hinten im Eingriff steht, indem er von der Außenfläche der peripheren Wand (40B) ausgehend nach außen vorsteht und wobei ein Abstand zwischen einem vorderen Ende des Arretierabschnitts (46) und einem vorstehenden Ende des Verriegelungsvorsprungs (44) kleiner eingestellt ist als der Durchmesser des Kabels (W).

5. Ein Ladeverbinder (10) nach irgendeinem der vorhergehenden Ansprüche 2 bis 4, wobei eine Abmessung einer ersten Seite der peripheren Wand (40B) entlang der Montagerichtung (MD) kleiner ist als eine Abmessung einer zweiten Seite davon in Montagerichtung (MD).

6. Ein Verfahren zur Montage eines Ladeverbinders (10) mit einem fahrzeugseitigen Anschluss, der in einem Fahrzeug bereitgestellt wird, um Strom bereitzustellen zum Aufladen einer Batterie, die im Fahrzeug installiert ist, das die folgenden Schritte umfasst:
montieren einer Schutzkappe (40; 50), die aus einem isolierenden Material hergestellt wird, auf einem Verbindungsabschnitt (13) eines Gehäusekörpers (11; 12), wenn dieser vom fahrzeugseitigen Anschluss getrennt ist, wobei ein Gummi- oder nachgiebiges oder flexibles Band (41; 51) integral oder einstückig an der Schutzkappe (40; 50) angeformt wird, und wobei die Schutzkappe (40; 50) mit dem Gehäusekörper (11; 12) durch das Band (41; 51) verbunden oder verbindbar ist, und
vor oder bei dem Verbinden des Verbindungsabschnitts (13) mit dem fahrzeugseitigen Anschluss, entfernen der Schutzkappe (40; 50) vom Verbindungsabschnitt (13) und anbringen der Schutzkappe (40; 50) an einem Kabel (W), das aus dem inneren des Gehäusekörpers (11; 12) herausgeführt wird, um mit einer Stromversorgung verbunden zu werden;
verriegeln des fahrzeugseitigen Anschlusses und des Verbindungsabschnitts (13) in einem verbundenen Zustand mittels eines Verriegelungsabschnitts (14A), wobei ein Hebel (14) im oder auf dem Gehäusekörper (11; 12) untergebracht wird, der Verriegelungsabschnitt (14A) an einem Endabschnitt des Hebels (14) bereitgestellt wird und konfiguriert ist, um vom Gehäusekörper (11; 12) vorzustehen, und wobei der Verriegelungsabschnitt (14A) einen Klauenabschnitt (14C) beinhaltet;
schützen des Verriegelungsabschnitts (14A) durch einen Fang- bzw. Arretierabschnitt (46; 56), der integral oder einstückig auf der Schutzkappe (40; 50) gebildet wird, wobei der Arretierabschnitt (46; 56) die Form eines Hakens aufweist, um am Kabel (W) festgehakt zu werden.

## Revendications

1. Un connecteur de charge (10) apte à être connecté à un connecteur côté véhicule fourni dans un véhicule pour fournir du courant afin de charger une batterie installée dans le véhicule, comprenant :
un corps de boîtier (11 ; 12) avec une portion de connexion (13) qui peut être connectée au connecteur côté véhicule ;
un capuchon protecteur (40 ; 50) constitué d'un matériau isolant et pouvant être monté sur la portion de connexion (13) déconnectée du connecteur côté véhicule ;
un câble (W) extrait à partir de l'intérieur du corps de boîtier (11 ; 12) pour être connecté à une source d'énergie, et
une portion de verrouillage (14A) pour verrouiller le connecteur côté véhicule et la portion de connexion (13) dans un état connecté,
sachant que
un levier (14) est logé dans ou sur le corps de boîtier (11 ; 12),
la portion de verrouillage (14A) est fournie auprès d'une portion d'extrémité du levier (14) et configurée pour saillir du corps de boîtier (11 ; 12),
le capuchon protecteur (40 ; 50) peut être détaché de la portion de connexion (13) et peut être attaché au câble (W) lors d'une connexion de la portion de connexion (13) au connecteur côté véhicule,
un cordon en caoutchouc ou résilient ou flexible (41 ; 51) est unitairement ou solidairement moulé avec le capuchon protecteur (40 ; 50), et que
le capuchon protecteur (40 ; 50) est connecté ou peut être connecté au corps de boîtier (11 ; 12) par le cordon (41 ; 51),
**caractérisé en ce que**
la portion de verrouillage (14A) inclut une portion de griffe (14C), et que
le capuchon protecteur (40 ; 50) inclut unitairement ou solidairement une portion de préhension (46 ; 56) pour protéger la portion de verrouillage (14A), et que
la portion de préhension (46 ; 56) présente la forme d'un crochet pour être accrochée sur le câble (W).

2. Un connecteur de charge (10) d'après la revendication 1, sachant que le capuchon protecteur (40 ; 50) inclut une paroi frontale (40A ; 50A) faisant face à la portion de connexion (13) dans une direction de montage (MD) pour couvrir la portion de connexion (13) et une paroi périphérique (40B ; 50B) qui s'étend à partir de la paroi frontale (40A ; 50A) dans la direction de montage (MD) le long de la surface extérieure de la portion de connexion (13).

3. Un de charge (10) d'après la revendication 2, sachant que :
la portion de connexion (13) inclut une borne d'alimentation électrique (20) pour fournir de l'énergie et au moins une paroi de séparation (45 ; 55) qui s'étend à partir d'une surface frontale de la paroi frontale (40A ; 50A) en direction de montage (MD) pour séparer la borne d'alimentation électrique (20) d'une autre borne.

4. Un connecteur de charge (10) d'après les revendications 2 ou 3, sachant que le capuchon protecteur (40) comprend en outre au moins une saillie de verrouillage (44) pour maintenir le capuchon protecteur (40) sur la portion de connexion (13) en étant engagée avec la portion de griffe (14C) de la portion de verrouillage (14A) par derrière en saillant vers l'extérieur à partir de la surface extérieure de la paroi périphérique (40B) et
sachant qu'une distance entre une extrémité menante de la portion de préhension (46) et une extrémité saillante de la saillie de verrouillage (44) est réglée pour être inférieure au diamètre du câble (W).

5. Un connecteur de charge (10) d'après une quelconque des revendications précédentes de 2 à 4, sachant qu'une dimension d'un premier côté de la paroi périphérique (40B) le long de la direction de montage (MD) est inférieure à une dimension d'un deuxième côté de celle-ci en direction de montage (MD).

6. Un procédé de montage d'un connecteur de charge (10) à un connecteur côté véhicule fourni dans un véhicule pour fournir du courant afin de charger une batterie installée dans le véhicule, comprenant les étapes suivantes, consistant à :
monter un capuchon protecteur (40 ; 50) constitué d'un matériau isolant sur une portion de connexion (13) d'un corps de boîtier (11 ; 12) quand elle est déconnectée du connecteur côté véhicule, sachant qu'un cordon en caoutchouc ou résilient ou flexible (41 ; 51) est unitairement ou solidairement moulé avec le capuchon protecteur (40 ; 50), et que le capuchon protecteur (40 ; 50) est connecté ou peut être connecté au corps de boîtier (11 ; 12) par le cordon (41 ; 51) ; et que
avant ou lors de la connexion de la portion de connexion (13) au connecteur côté véhicule, enlever le capuchon protecteur (40 ; 50) de la portion de connexion (13) et attacher le capuchon protecteur (40 ; 50) à un câble (W) extrait à partir de l'intérieur du corps de boîtier (11 ; 12) pour être connecté à une source d'énergie ;
verrouiller le connecteur côté véhicule et la portion de connexion (13) dans un état connecté au moyen d'une portion de verrouillage (14A), sachant qu'un levier (14) est logé dans ou sur le corps de boîtier (11 ; 12), que la portion de verrouillage (14A) est fournie auprès d'une portion d'extrémité du levier (14) et configurée pour saillir du corps de boîtier (11 ; 12), et que la portion de verrouillage (14A) inclut une portion de griffe (14C) ;
protéger la portion de verrouillage (14A) par une portion de préhension (46 ; 56) unitairement ou solidairement formée sur le capuchon protecteur (40 ; 50), sachant que la portion de préhension (46 ; 56) présente la forme d'un crochet pour être accrochée sur le câble (W).
